# EUROPEAN PATENT APPLICATION

(11) **EP 0 940 879 A1**
(43) Date of publication of application: **08.09.1999**
(21) Application number: 98301595.9
(22) Date of filing: 04.03.1998
(51) Int. Cl.: H01Q 1/12, H01Q 3/06

(54) **Bracket**

(71) Applicant: LUCENT TECHNOLOGIES INC., Murray Hill, New Jersey 07974-0636 (US)
(72) Inventor: Gates, William George, Milton Keynes, MK12 5DK (GB); Hutton, Anthony John, Newport, NP9 9GF (GB); Skeats, Anthony James, Bath, Somerset, BA2 4DP (GB)
(74) Representative: Weitzel, David Stanley

(57) **Abstract**

A bracket is disclosed for mounting one object on another. The bracket has two pivotally joined links, one for receiving said one object. Each link is pivotally joined to a respective fixing member for fixing to the other object. The pivotal joints have parallel pivotal axes so that the distance at which the fixing members are spaced, when fixed to the other object determines the angular orientation of said one object relative to the other.

## Description

This invention relates to brackets.

The background to the invention will be described with reference to a particular application. Other applications may occur readily to the reader.

Cellular mobile telecommunications networks utilise directional antennas which serve a sector, generally 120°, of a cell which is usually hexagonal. The antenna may be incorporated in a single unit with an associated processor, a transmitter and a receiver. The antenna is required to be directed at the intended sector and, additionally, slightly downwardly.

Against this background there is provided a bracket for mounting one object on another, comprising two pivotally joined links, one for receiving said one object; each link being pivotally joined to a respective fixing member for fixing to the other object, the pivotal joints having parallel pivotal axes so that the distance at which the fixing members are spaced, when fixed to the other object determines the angular orientation of said one object relative to the other.

In order to avoid the possibility that slippage could alter the angle of the unit, one of the joints preferably includes at least one hole in each member, the holes being so aligned that a pin may be passed through both to fix the joint.

In order to facilitate fixing the bracket to a pole, the fixing members preferably have means to receive a strap.

The invention extends to base station equipment for a cellular mobile telecommunications network, including a directional antenna and being fixed to a structure, e.g. a pole, by a bracket of the invention.

One embodiment of the invention will now be described, by way of example, with reference to the accompanying drawings, in which:

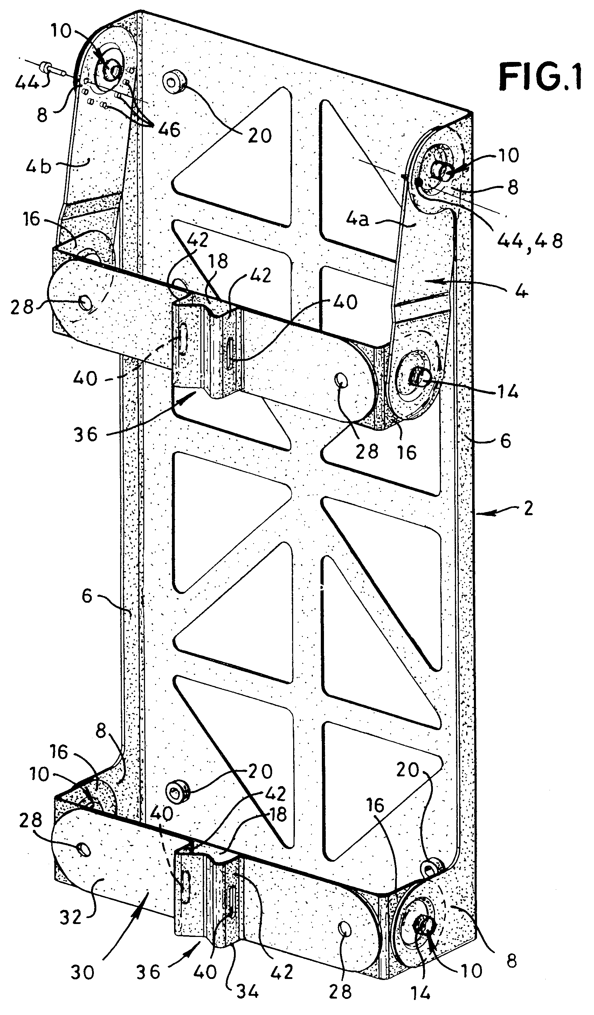

Figure 1 is a pictorial view of a bracket embodying the invention;
Figure 2 is a side view of the bracket of Figure 1 in use mounting base station equipment on a pole; and
Figure 3 is a scrap section through a joint of the bracket of Figure 1.

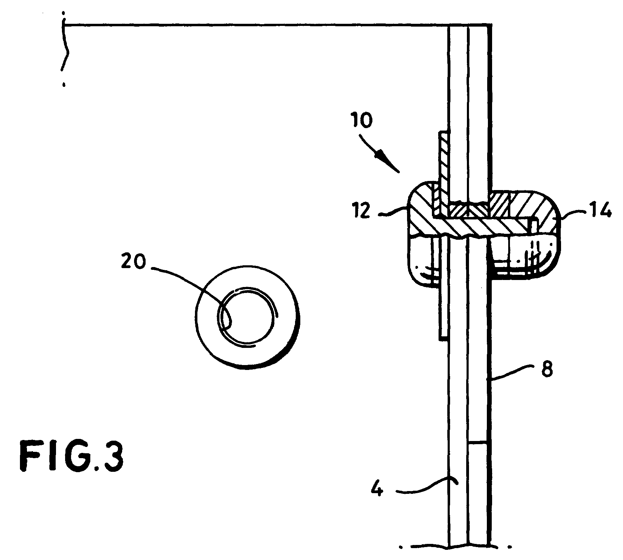

Referring to the drawings, a bracket 2 has two links 4 and 6. The link 6 comprises a metal pressing which has two lugs 8 on both ends to provide a U-shaped cross section. The link 4 is pivotally joined to the upper end of the link 6. As shown, the link 4 comprises two members 4a and 4b. One end of each member 4a and 4b is joined to a respective lug 8 by a pivot pin 10 retained by a head 12 and a washer 14 (see Figure 3).

The other ends of both links 4 and 6 are pivotally joined to lugs 16 of two U-shaped fixing members 18.

Four threaded bushes 20 (only three can be seen in the drawing) receive machine screws to secure a base station unit 22 to the bracket. The base station unit contains a processor, a transmitter and a receiver amongst other things not shown, and a flat plate directional antenna 24 mounted inside an the case 26 of the unit 22.

In use the fixing members 18 are secured to a structure on which the unit 22 is to be mounted. The fixing members may be secured directly to the structure by bolts, for example, through holes 28. Alternatively, the fixing members 18 can be adapted by adapters 30 for strapping to a pole. Each adapter 30 comprises a plate 32 which is bolted to the U-shaped fixing member through the holes 28. At its centre, the plate 32 is pressed in a W-shape 34 to provide a central recess 36. In use, the pole is received by the recess 36 and the plate 32 is strapped to the pole by straps 38 which pass through holes 40 in the outer arms 42 of the W-shape.

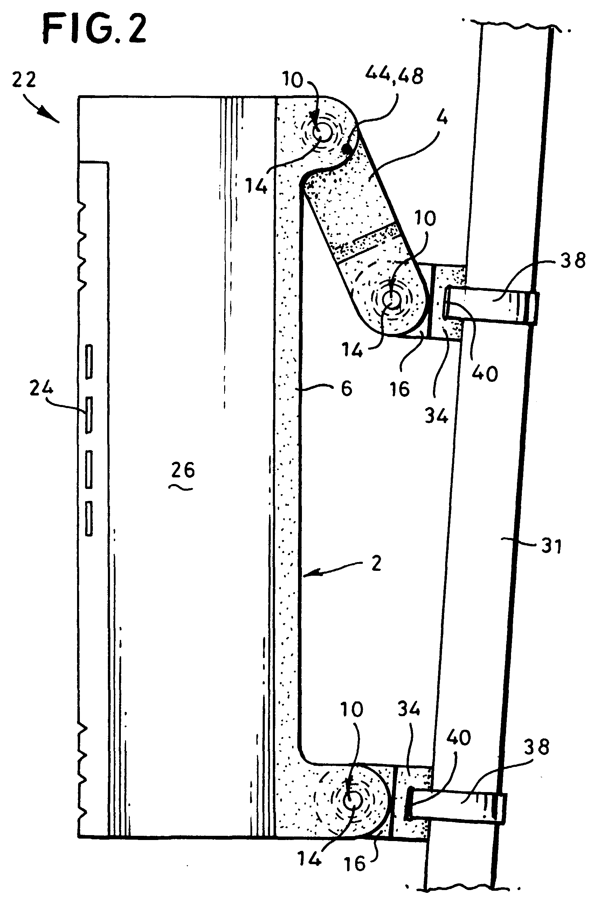

As will be appreciated from figure 2, the closer the fixing members 18 are set on the pole or other structure, the closer to vertical is the unit 22 and thus the plate antenna 24. Conversely, the further the fixing members are spaced, the further the unit 22 is declined from vertical.

## Claims

1. A bracket for mounting one object on another, comprising two pivotally joined links, one for receiving said one object; each link being pivotally joined to a respective fixing member for fixing to the other object, the pivotal joints having parallel pivotal axes so that the distance at which the fixing members are spaced, when fixed to the other object determines the angular orientation of said one object relative to the other.

2. A bracket as claimed in claim 1, wherein one link comprises two separate members side by side each pivotally joined to the other link and to the associated fixing member.

3. A bracket as claimed in claim 1or 2, wherein one of the joints includes at least one hole in each member an/or link, the holes being so aligned that a pin may be passed through both to fix the joint.

4. A bracket as claimed in any preceding claim, wherein the fixing members have means to receive a strap for fixing to a pole.

5. Base station equipment for a cellular mobile telecommunications network, including a directional antenna and being fixed to a structure by a bracket as claimed in any preceding claim.
